# EUROPEAN PATENT SPECIFICATION

(11) **EP 2 898 194 B1**
(45) Date of publication and mention of the grant of the patent: **13.09.2017**
(21) Application number: 13839843.3
(22) Date of filing: 17.09.2013
(51) Int. Cl.: F01K 27/00

(54) **PROCESS AND PLANT FOR PRODUCTION OF ELECTRICITY BY COMBUSTION**
VERFAHREN UND ANLAGE ZUR HERSTELLUNG VON ELEKTRIZITÄT MITTELS VERBRENNUNG
PROCESSUS ET INSTALLATION POUR LA PRODUCTION D'ÉLECTRICITÉ PAR COMBUSTION

(30) Priority: 20.09.2012 SE 1251055
(43) Date of publication of application: 29.07.2015
(73) Proprietor: Wachtmeister, Isa, 455 91 Munkedal (SE)
(72) Inventor: PETTERSSON, Kjell, S-455 91 Munkedal (SE)
(74) Representative: Zacco Sweden AB
(86) International application number: PCT/SE2013/051082
(87) International publication number: WO 2014/046600

(56) References cited:
- WO-A1-97/16629
- WO-A1-2009/126044
- AU-B2- 691 670
- AU-B2- 2003 215 418
- JP-A- H09 222 003
- US-A- 4 068 476
- US-A1- 2004 237 525

## Description

The present invention relates to a process for local and small-scale production of electricity by combustion of renewable fuel, and a plant for carrying through the process.

There are a number of alternatives and solutions to produce one's own electricity, for example by means of sun, wind and water. However, there is a lack of effective and non-polluting production of electricity for everybody using in particular renewable fuels for heating. Besides obtaining heating, it shall also be possible to produce one's own electricity by means of the same fuel. That is functioning well today, but only in larger and medium-sized combined power and heating plants, where steam turbines are used to operate a generator. To simply use such plants on a reduced scale has not been especially effective, since it is expensive, and the effectiveness decreases remarkably if the plants are used on a reduced scale in order to be suitable for smaller requirements, for example for household requirements. Furthermore, the risk of damage increases when such high pressures are used, which makes it risky and complicated to install such a plant in residential buildings. Such alternatives for producing one's own electricity are for example disclosed in AU-2003215418B, AU-691670B or US-4068476-A. The main object of the present invention is, therefore, in the first place to provide a process, which among other things solves the problems mentioned above in an effective, safe, economical and non-polluting way. Furthermore, it is an object to provide a plant, which also solves the above mentioned problems and which is possible to use when carrying through said process.

Said object is reached by means of a process and a plant, respectively, according to independent claims 1 and 4 of the present invention, which is mainly characterized in that the combustion takes place in a boiler, which has oil or another heat carrying medium with higher boiling point than water as heat conducting medium, that the heated oil, or another heat carrying medium with higher boiling point than water, conveyed from the boiler is circulated through a steam heat exchanger for heating water or another suitable fluid in order to generate steam, that the steam is conveyed to pairs of membrane tanks or to a piston pump, which comprises a centrally located cylinder space with piston, which space receives water or another fluid, and with a steam cylinder space with piston located on either side of said space, and with connecting piston rod, and where the steam is exchanged into water pressure or another fluid pressure and is conveyed to a pressure tank accumulator, and that said water pressure or another fluid pressure drives a turbine, which in its turn operates a generator to produce electricity,
respectively,
that a boiler comprises circulation conduit for the reception of oil or another heat carrying medium with higher boiling point than water, and which in its turn leads through a steam heat exchanger,
that a boiler (1) comprises circulation conduit for the reception of oil (2) or another heat carrying medium with higher boiling point than water, and which in its turn leads through a steam heat exchanger (3),
that pairs of membrane tanks, where the respective membrane divides the associated membrane tank into separate spaces, or a three way linear piston pump, which comprises a centrally located cylinder space with piston, which space receives water or another fluid, and with a steam cylinder space with piston located on either side of said space, and with connecting piston rod, is/are arranged to exchange the pressure of the steam into water pressure or another fluid pressure, that the water pressure or another fluid pressure is accumulated in a pressure tank accumulator, and that a turbine is arranged to be driven by said water pressure or another fluid pressure, and which in its turn is arranged to operate a generator, in which electricity is arranged to be produced.

On the basis of prior art the idea is to be able to connect a specific product to one's own boiler in a simple way and thereby also to produce one's own electricity together with one's normal heat production. When heat is needed in the house electricity is produced at the same time, and this means that it is possible to obtain high effectiveness in the plant. According to the present invention it is possible to obtain a satisfactory production of electricity with such a low pressure as 500 kPa (5 bar), which production, depending on the size of the plant producing the electricity, in the first place will produce one's own need for electricity, but also with a possibility of a certain surplus of electricity production.

The main idea of the invention is briefly: to locally produce electricity and heat by means of optional biofuel, for one's own need and/or for selling. To generate steam pressure in heat exchangers having oil or another heat carrying medium with high boiling point, in any case higher boiling point than water, as heat carrier, which steam pressure through valve systems alternately fills/empties pressure tanks provided with membranes, alternatively by steam-driven linear piston pump generate water pressure and by means thereof drive a turbine to produce electricity. The return steam is condensed through heat exchangers, and there the heat is delivered to the heating system. Condensed steam is returned to the process.

Advantages among other things obtained by the invention:
- A small-scale and self-supporting system.
- Has a working pressure below 1000 kPa (10 bar).
- Can convert all types of renewable fuels into both electricity and heat.
- The production of electricity and heat takes place locally.
- Burdens the electricity supply network to a less extent.
- Opportunity of influencing one's own electricity supply.

Below the invention is described with oil used as heat carrying medium.

The invention is described in the following as a number of preferred embodiments, whereby it is referred to the accompanying drawings, in which:

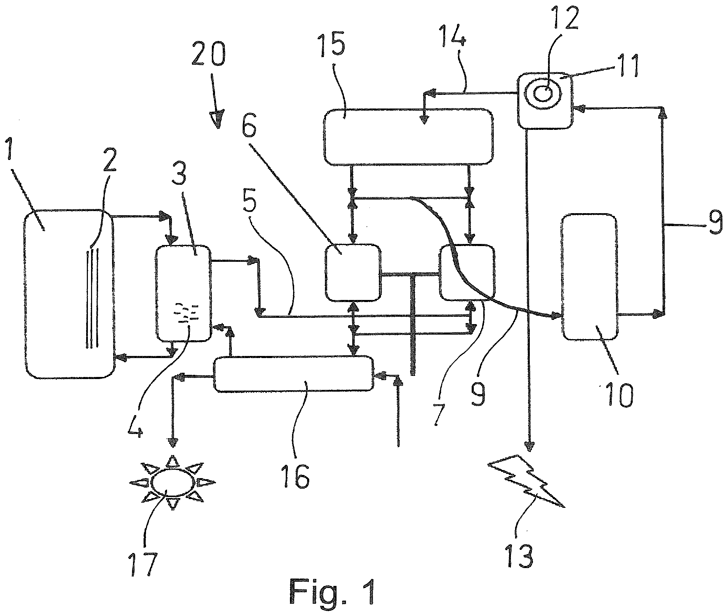

Fig. 1 schematically illustrates a plant according to the present invention with the various steps of the process used,

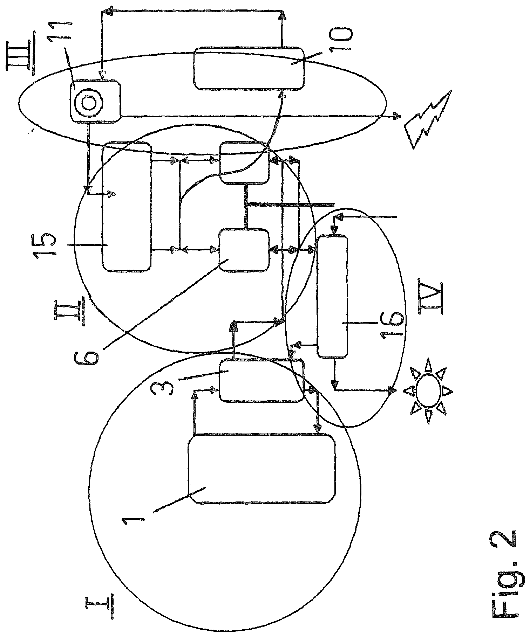

Fig. 2 illustrates the plant with encircled process steps I-IV,
Fig. 3 illustrates a piston pump, which is alternatively used according to the invention, and
Fig. 4 illustrates more in detail the construction of said piston pump and the process in which it is used.

A process for providing local and small-scale production of electricity by combustion of renewable fuel comprises according to the present invention that the fuel is burned in a boiler 1 having oil or another heat carrying medium with high boiling point, in any case higher boiling point than water, as heat conducting medium. Thereby, the heated oil 2 etc. conveyed from the boiler 1 is circulated through a heat exchanger 3 for heating the water 4 therein in order to generate steam. In the boiler 1 having oil 2 etc. as medium, the oil 2 is heated to about 150°C or to another appropriate temperature below its boiling point. For that reason oil 2 is used, which has a boiling point of almost 300°C, instead of water, which was used previously and which has a much lower boiling point. This is step I of the process.

There never arises any pressure, as oil has a higher boiling point than what is used in the process. In the steam exchanger 3 a pressure of up to 500 kPa (5 bar) will arise at said temperature 150°C of the oil when the water becomes steam. That steam pressure will be used in a step II of the process.

Further, said steam pressure 5 is conveyed to membrane tanks 6, 7, for example arranged in pairs, or to a piston pump 8, where the steam is exchanged into water pressure 9 and conveyed to a pressure tank accumulator 10. After that said water pressure 9 drives a turbine 11, which in its turn operates a generator 12, to produce electricity 13. This is step III.

When membrane tanks are used, membrane tanks 6, 7 arranged in pairs and connected in parallel are arranged to alternately empty and fill the tanks 6, 7 with water by means of a valve system, which is not shown in the drawings or described further. Suitably, said membrane tanks 6, 7 are connected in parallel, so that a pump function is obtained, and that this reciprocation is used to control said valve system.

The steam pressure 5 is conveyed to one of the membrane tanks 6, 7 having a membrane inside, which separates the two sides of the tank from one another. At the upper side the tank has been filled with water, which has flown down from a tank 15 above. When the steam pressure enters the tank, it will press out the water. By means of non-return valves the water is conveyed and forced to a pressure tank accumulator 10, where the water and the pressure are accumulated.

By using two membrane tanks 6, 7 connected in parallel a pump function is obtained, which alternately empties and fills the tanks by directing the flow to them by means of a valve system. The tanks 6, 7 can be fixedly mounted or articulated in the middle between the tanks 6, 7. Since the weight ratio between a tank filled with water and an empty tank is that a full tank will weigh more than a recently emptied tank, which only contains water steam, this can be used, and then the tanks will move upwards and downwards depending on in which stage of the process they are. This reciprocation can control the valve system, which makes the system self-regulating. Otherwise, the system is controlled by means of solenoid valves, which are electrically controlled.

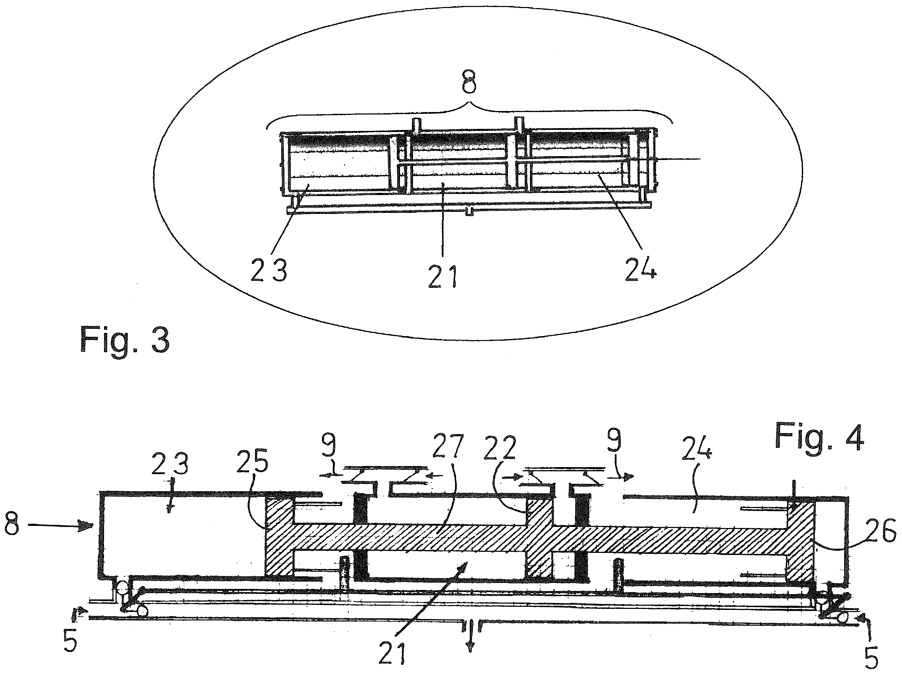

Alternatively, a three way linear piston pump 8 is used to exchange the steam pressure 5 into water pressure 9, and with the same principle as for the membrane tanks 6, 7. In the middle of the cylinder of the piston pump 8 there is a space 21 with piston 22, which will only contain water. Without contact with the steam pressure 5, on both sides of this space 21, there are two separate spaces 23, 24 containing pistons 25, 26, where the steam pressure 5 will enter. The steam pressure enters in one end and, then, it will press the piston in the steam space to its end position, and at the same time the other pistons are also pressed, as they are all fixed to the same piston rod 27. This means that the piston 22 in the middle presses the water from one side to the other, and then it is pressed out into the pressure tank accumulator 10. The steam space at the other side of the water space is also pressed in the same direction, which means that the used steam is pressed out and further into a heat exchanger 16 or a hot water accumulator tank (see Fig. 4).

In a third step III, although now in the pressure tank accumulator 10, each sequence of step II of the process is accumulated and generates an overpressure of 500 kPa (5 bar). The heat of the oil and the steam pressure follow the same graph. At 150°C you get 500 kPa and at 160°C you get 600 kPa. Then, this water pressure is released in a flow through a turbine 11, which exchanges water pressure into pure kinetic energy and which in its turn drives a generator 12. Then, electric current 13 can be produced. The used water 14 is then collected in a pressureless vessel 15. Said water 14 fills the membrane tanks 6, 7 in step II, or a linear piston pump 8.

The return steam used in step II is conveyed into a heat exchanger 16 or a hot water accumulator tank. The temperature of said steam shall now decrease from 150°C to 95-100°C, and then it is to be returned to the process in step I. Of 0,1 water it becomes about 40 water steam with a pressure of 500 kPa (5 bar), and this condensed water will be injected into the steam heat exchanger in small doses of about 1-2 dl. Without pressure 1 water becomes about 1700 1 water steam. Thereby, the hot water 17 is received in the household.

Thus, the steam 5 used to alternately empty and fill the tanks 6, 7 or the cylinder of the piston pump 8 with water is returned to a heat exchanger 16 or to a hot water accumulator tank, not shown in the drawings, to generate heat. The oil 2, or another suitable medium, in the boiler 1 is heated to about 150°C or to another temperature appropriate for said medium.

A plant 20, which is suitable to use for carrying through a process for local and small-scale production of electricity 13 by combustion of renewable fuel according to the present invention, should have been partly described above, but more in detail it comprises a boiler 1 comprising circulation conduit for the reception of oil 2 or another heat carrying medium, and which in its turn leads through a steam heat exchanger 3. Membrane tanks 6, 7 are arranged in pairs, whereby respective membrane divides the associated membrane tank 6, 7 into separate spaces. Alternatively, a three way linear piston pump 8 is arranged. The purpose is to exchange the steam pressure 5 into water pressure 9. In a pressure tank accumulator 10 the water pressure 9 is accumulated, and a turbine 11 is arranged to be driven by said water pressure 9 and which in its turn is arranged to operate a generator 12, in which electricity 13 is arranged to be produced.

A pressureless vessel 15 is arranged to receive used water 14 from the turbine 11 and said water is to be filled into the membrane tanks 6, 7 or the piston pump 8. Said three way linear piston pump 8 comprises a centrally located cylinder space 21 with piston 22, which space receives water, and with a steam cylinder space 23, 24 with piston 25, 26 located on either side of said space 21, and with connecting piston rod 27. In that connection valves are arranged, but their function should be understood without reference.

The pressure tank accumulator 10 is arranged to sequentially accumulate the water pressure 9 generated in the membrane tanks 6, 7 or in the three way linear piston pump 8. One of the steam receiving spaces 23, 24 leads to a heat exchanger 16 or a hot water accumulator tank for generation of heat 17.

The nature and the function of the invention should have been clear from the above description and the illustrations of the drawings.

Of course, the invention is not limited to the embodiments described above and illustrated in the accompanying drawings. Modifications are possible, especially as far as the nature of the different parts is concerned, or by using equivalent technique, without departing from the scope of the invention as it is defined in the patent claims.

## Claims

1. Process for local and small-scale production of electricity (13) by combustion of renewable fuel, **characterized in that** the combustion takes place in a boiler (1), which has oil (2) or another heat carrying medium with higher boiling point than water as heat conducting medium, that the heated oil (2), or another heat carrying medium with higher boiling point than water, conveyed from the boiler (1) is circulated through a steam heat exchanger (3) for heating water (4) or another suitable fluid in order to generate steam (5), that the steam (5) is conveyed to pairs of membrane tanks (6, 7) or to a piston pump (8), which comprises a centrally located cylinder space (21) with piston (22), which space receives water or another fluid, and with a steam cylinder space (23, 24) with piston (25, 26) located on either side of said space (21), and with connecting piston rod (27), and where the steam (5) is exchanged into water pressure or another fluid pressure (9) and is conveyed to a pressure tank accumulator (10), that said water pressure or another fluid pressure (9) drives a turbine (11), which in its turn operates a generator (12) to produce electricity (13), that the membrane tanks (6, 7) arranged in pairs and connected in parallel are used, which are alternately emptied and filled with water etc. by means of a valve system, and that said membrane tanks (6, 7) are used connected in parallel, so that a pump function is obtained, and that this alternating emptying and filling of water etc. is used to control said valve system.

2. Process according to claim 1, **characterized in that** the steam (5) used to alternately empty and fill the tanks (6, 7) or the cylinder of a piston pump (8) with water is returned to a heat exchanger (16) or to a hot water accumulator tank to generate heat (17).

3. Process according to anyone of the preceding claims, **characterized in that** the oil (2), or another heat carrying medium with higher boiling point than water, in the boiler (1) is heated to a temperature below its boiling point.

4. Plant (20) for carrying through a process for local and small-scale production of electricity (13) by combustion of renewable fuel according to anyone of the preceding claims, **characterized in**
**that** a boiler (1) comprises circulation conduit for the reception of oil (2) or another heat carrying medium with higher boiling point than water, and which in its turn leads through a steam heat exchanger (3),
**that** pairs of membrane tanks (6, 7), where the respective membrane divides the associated membrane tank (6, 7) into separate spaces, or a three way linear piston pump (8), which comprises a centrally located cylinder space (21) with piston (22), which space receives water or another fluid, and with a steam cylinder space (23, 24) with piston (25, 26) located on either side of said space (21), and with connecting piston rod (27), is/are arranged to exchange the pressure of the steam (5) into water pressure or another fluid pressure (9), that the water pressure or another fluid pressure (9) is accumulated in a pressure tank accumulator (10), that a turbine (11) is arranged to be driven by said water pressure or another fluid pressure (9), and which in its turn is arranged to operate a generator (12), in which electricity (13) is arranged to be produced, and that the three way linear piston pump (8), which is arranged to exchange the steam pressure (5) into water pressure (9), comprises valves to the centrally located cylinder space (21), which receives water or another fluid, on either side of the piston (22) dividing said space (21), and valves for the separate steam cylinder spaces (23, 24) on either side of the centrally located space (21), which receives water or another fluid, for the steam pressure (5), which is conveyed to and from said separate steam cylinder spaces (23, 24), respectively, and that a common piston rod (27) supports one piston (22, 25, 26) for each of the respective spaces (21, 23, 24).

5. Plant according to claim 4,
**characterized in that** a pressureless vessel (15) is arranged to receive used water (14) from the turbine (11).

6. Plant according to anyone of the claims 4-5, **characterized in that** the pressure tank accumulator (10) is arranged to sequentially accumulate the water pressure (9) generated in said number of membrane tanks (6, 7) or in the three way linear piston pump (8).

7. Plant according to anyone of the claims 5-6, **characterized in that** one of the steam receiving spaces leads to a heat exchanger (16) or a hot water accumulator tank for generation of heat.

## Patentansprüche

1. Prozess zur lokalen Erzeugung von Elektrizität (13) in kleinem Maßstab durch Verbrennung von erneuerbarem Brennstoff, **dadurch gekennzeichnet, dass** die Verbrennung in einem Heizkessel (1) stattfindet, der Öl (2) oder ein anderes Wärme führendes Medium mit einem höheren Siedepunkt als Wasser als Wärme leitendes Medium aufweist, dass das erwärmte Öl (2) oder das andere Wärme führende Medium mit einem höheren Siedepunkt als Wasser, das von dem Heizkessel (1) gefördert wird, durch einen Dampfwärmetauscher (3) zum Heizen von Wasser (4) oder einem anderen geeigneten Fluid zirkuliert wird, um Dampf (5) zu erzeugen, dass der Dampf (5) an Paare von Membrantanks (6, 7) oder an eine Kolbenpumpe (8) gefördert wird, die einen zentral angeordneten Zylinderraum (21) mit Kolben (22), wobei der Raum Wasser oder ein anderes Fluid aufnimmt, und mit einem Dampfzylinderraum (23, 24) mit Kolben (25, 26), die an jeder Seite des Raumes (21) angeordnet sind, und mit einer Pleuelkolbenstange (27) umfasst, und wobei der Dampf (5) in Wasserdruck oder einen anderen Fluiddruck (9) getauscht wird und an einen Drucktankakkumulator (10) gefördert wird, dass der Wasserdruck oder ein anderer Fluiddruck (9) eine Turbine (11) antreibt, die ihrerseits einen Generator (12) betreibt, um Elektrizität (13) zu erzeugen, dass die Membrantanks (6, 7) in Paaren angeordnet und parallel verschaltet verwendet sind, die abwechselnd geleert und mit Wasser, etc. mittels eines Ventilsystems gefüllt werden, und dass die Membrantanks (6, 7) parallel verschaltet verwendet werden, so dass eine Pumpenfunktion erhalten wird, und dass dieses abwechselnde Leeren und Füllen von Wasser, etc. dazu verwendet ist, das Ventilsystem zu steuern.

2. Prozess nach Anspruch 1, **dadurch gekennzeichnet, dass** der Dampf (5), der verwendet ist, um die Tanks (6, 7) oder den Zylinder einer Kolbenpumpe (8) abwechselnd zu leeren und mit Wasser zu füllen, zu einem Wärmetauscher (16) oder einem Heißwasserakkumulatortank rückgeführt ist, um Wärme (17) zu erzeugen.

3. Prozess nach einem der vorhergehenden Ansprüche, **dadurch gekennzeichnet, dass** das Öl (2) oder das andere Wärme führende Medium mit höherem Siedepunkt als Wasser in dem Heizkessel (1) auf eine Temperatur unterhalb ihres Siedepunktes erhitzt wird.

4. Anlage (20) zum Durchführen eines Prozesses zur lokalen Erzeugung von Elektrizität (13) im kleinen Maßstab durch Verbrennung von erneuerbarem Brennstoff nach einem der vorhergehenden Ansprüche, **dadurch gekennzeichnet,**
**dass** ein Heizkessel (1) eine Zirkulationsleitung für die Aufnahme von Öl (2) oder einem anderen Wärme führenden Medium mit höherem Siedepunkt als Wasser umfasst, und die ihrerseits durch einen Dampfwärmetauscher führt,
**dass** Paare von Membrantanks (6, 7), wobei die jeweilige Membran den zugeordneten Membrantank (6, 7) in separate Räume teilt, oder eine lineare Dreiwege-Kolbenpumpe (8), die einen zentral angeordneten Zylinderraum (21) mit einem Kolben (22), wobei der Raum Wasser oder ein anderes Fluid aufnimmt, und mit einem Dampfzylinderraum (23, 24) mit Kolben (25, 26), die auf jeder Seite des Raumes (21) angeordnet sind, und mit einer Verbindungspleuelstange (27) umfasst, so angeordnet ist/sind, um den Druck des Dampfs (5) in Wasserdruck oder einen anderen Fluiddruck (9) zu tauschen, dass der Wasserdruck oder der andere Fluiddruck (9) in einem Drucktankakkumulator (10) akkumuliert wird, dass eine Turbine (11) so angeordnet ist, dass sie von dem Wasserdruck oder einem anderen Fluiddruck (9) angetrieben wird, und die ihrerseits so angeordnet ist, einen Generator (12) zu betreiben, in welchem Elektrizität (13) erzeugt werden kann, und dass die lineare Dreiwege-Kolbenpumpe (8), die so angeordnet ist, den Dampfdruck (5) in Wasserdruck (9) zu tauschen, Ventile zu dem zentral angeordneten Zylinderraum (21) umfasst, der Wasser oder ein anderes Fluid auf jeder Seite des Kolbens (22), der den Raum (21) trennt, aufnimmt, und Ventile für die separaten Dampfzylinderräume (23, 24) auf jeder Seite des zentral angeordneten Raumes (21) umfasst, der Wasser oder ein anderes Fluid für den Dampfdruck (5) aufnimmt, der zu und von den separaten Dampfzylinderräumen (23, 24) gefördert wird, und dass eine gemeinsame Kolbenstange (27) einen Kolben (22, 25, 26) für jeden der jeweiligen Räume (21, 23, 24) lagert.

5. Anlage nach Anspruch 4, **dadurch gekennzeichnet, dass** ein druckloses Gefäß (15) zur Aufnahme von benutztem Wasser (14) von der Turbine (11) angeordnet ist.

6. Anlage nach einem der Ansprüche 4 bis 5, **dadurch gekennzeichnet, dass** der Drucktankakkumulator (10) so angeordnet ist, den Wasserdruck (9), der in der Anzahl von Membrantanks (6, 7) oder in der linearen Dreiwege-Kolbenpumpe (8) erzeugt ist, sequentiell zu akkumulieren.

7. Anlage nach einem der Ansprüche 5 bis 6, **dadurch gekennzeichnet, dass** einer der Dampfaufnahmeräume zu einem Wärmetauscher (16) oder einem Heißwasserakkumulatortank zur Erzeugung von Wärme führt.

## Revendications

1. Procédé de production locale et à petite échelle d'électricité (13) par combustion d'un combustible renouvelable, **caractérisé en ce que** la combustion a lieu dans une chaudière (1), qui a de l'huile (2) ou un autre agent de transport de chaleur avec un point d'ébullition plus élevé par rapport à l'eau comme agent de conduction de chaleur, **en ce que** l'huile chauffée (2), ou un autre agent de transport de chaleur avec un point d'ébullition plus élevé que l'eau, acheminé à partir de la chaudière (1) est mis en circulation à travers un échangeur de chaleur à vapeur (3) pour chauffer de l'eau (4) ou un autre fluide approprié de manière à générer de la vapeur (5), de sorte que de la vapeur (5) est acheminée vers des paires de réservoirs à membrane (6, 7) ou vers une pompe à piston (8), qui comprend un espace cylindrique central (21) avec un piston (22), lequel espace reçoit de l'eau ou un autre fluide, et avec un espace de cylindre à vapeur (23, 24) avec un piston (25, 26) situé des deux côtés dudit espace (21), et avec une tige de piston de connexion (27), et où la vapeur (5) est transformée en pression d'eau ou en une autre pression de fluide (9) et est acheminée vers un accumulateur à réservoir de pression (10), **en ce que** ladite pression d'eau ou une autre pression de fluide (9) entraîne une turbine (11), qui à son tour actionne un générateur (12) pour produire de l'électricité (13), **en ce que** les réservoirs à membrane (6, 7) disposés par paires et connectés en parallèle sont utilisés, qui sont alternativement vidés et remplis avec de l'eau etc. au moyen d'un système de vannes, et **en ce que** lesdits réservoirs à membrane (6, 7) sont utilisés en étant connectés en parallèle, de sorte qu'une fonction de pompage soit obtenue, et de sorte que ce vidage et remplissage alternatif d'eau etc. est utilisé pour commander ledit système de vanne.

2. Procédé selon la revendication 1, **caractérisé en ce que** la vapeur (5) utilisée pour vider et remplir alternativement les réservoirs (6, 7) ou le cylindre d'une pompe à piston (8) avec de l'eau est renvoyée vers un échangeur de chaleur (16) ou vers un réservoir d'accumulation d'eau chaude pour générer de la chaleur (17).

3. Procédé selon l'une quelconque des revendications précédentes, **caractérisé en ce que** l'huile (2) ou un autre agent de transport de chaleur avec un point d'ébullition plus élevé que l'eau, dans la chaudière (1) est chauffé jusqu'à une température inférieure à son point d'ébullition.

4. Installation (20) pour réaliser un procédé de production locale et à petite échelle d'électricité (13) par combustion d'un combustible renouvelable selon l'une quelconque des revendications précédentes, **caractérisée**
**en ce qu'**une chaudière (1) comprend un conduit de circulation pour la réception d'huile (2) ou d'un autre agent de transport de chaleur avec un point d'ébullition plus élevé que l'eau, et qui à son tour conduit à travers un échangeur de chaleur à vapeur (3),
**en ce que** des paires de réservoirs à membrane (6, 7), où la membrane respective divise le réservoir à membrane associé (6, 7) en espaces séparés, ou une pompe à piston linéaire à trois voies (8), qui comprend un espace cylindrique central (21) avec un piston (22), lequel espace reçoit de l'eau ou un autre fluide, et avec un espace de cylindre à vapeur (23, 24) avec un piston (25, 26) situé des deux côtés dudit espace (21), et avec une tige de piston de connexion (27), sont conçus pour transformer la pression de la vapeur (5) en pression d'eau ou en une autre pression de fluide (9), en ce que la pression d'eau ou une autre pression de fluide (9) est accumulée dans un accumulateur à réservoir de pression (10), en ce qu'une turbine (11) est conçue pour être entraînée par ladite pression d'eau ou une autre pression de fluide (9), et qui à son tour est conçue pour actionner un générateur (12), dans lequel de l'électricité (13) doit être produite, et en ce que la pompe à piston linéaire à trois voies (8), qui est conçue pour transformer la pression de vapeur (5) en pression d'eau (9), comprend des vannes vers l'espace cylindrique central (21), qui reçoit de l'eau ou un autre fluide, des deux côtés du piston (22) séparant ledit espace (21), et des vannes pour les espaces cylindriques à vapeur séparés (23, 24) des deux côtés de l'espace central (21), qui reçoit de l'eau ou un autre fluide, pour la pression de vapeur (5), qui est acheminée vers et depuis lesdits espaces cylindriques à vapeur séparés (23, 24), respectivement, et en ce qu'une tige de piston commune (27) supporte un piston (22, 25, 26) pour chacun des espaces respectifs (21, 23, 24).

5. Installation selon la revendication 4, **caractérisée en ce qu'**un récipient sans pression (15) est conçue pour recevoir de l'eau utilisée (14) provenant de la turbine (11).

6. Installation selon l'une quelconque des revendications 4 à 5, **caractérisée en ce que** l'accumulateur à réservoir de pression (10) est conçu pour accumuler séquentiellement la pression d'eau (9) générée dans ledit nombre de réservoirs à membrane (6, 7) ou dans la pompe à piston linéaire à trois voies (8).

7. Installation selon l'une quelconque des revendications 5 à 6, **caractérisée en ce qu'**un des espaces de réception de vapeur conduit à un échangeur de chaleur (16) ou à un réservoir d'accumulation d'eau chaude pour une génération de chaleur.
